(19) **Europäisches Patentamt / European Patent Office / Office européen des brevets**

(11) **EP 2 171 883 B1**

(12) **EUROPEAN PATENT SPECIFICATION**

(45) Date of publication and mention of the grant of the patent:
**13.04.2016 Bulletin 2016/15**

(21) Application number: **08712811.2**

(22) Date of filing: **15.02.2008**

(51) Int Cl.:
***H04B 7/08*** (2006.01)

(86) International application number:
**PCT/SE2008/050181**

(87) International publication number:
**WO 2009/002249 (31.12.2008 Gazette 2009/01)**

(54) **METHODS AND ARRANGEMENTS IN A CELLULAR TELECOMMUNICATION SYSTEM**

VERFAHREN UND ANORDNUNGEN IN EINEM ZELLULAREN TELEKOMMUNIKATIONSSYSTEM

PROCÉDÉS ET SYSTÈMES D'UN SYSTÈME DE TÉLÉCOMMUNICATION CELLULAIRE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.06.2007 SE 0701590**

(43) Date of publication of application:
**07.04.2010 Bulletin 2010/14**

(73) Proprietor: **Telefonaktiebolaget LM Ericsson (publ)**
**164 83 Stockholm (SE)**

(72) Inventors:
• **KAZMI, Muhammad**
  **S-167 39 Bromma (SE)**
• **HILTUNEN, Kimmo**
  **FI-02230 Esbo (FI)**

(74) Representative: **Brann AB**
**P.O. Box 3690**
**Drottninggatan 27**
**103 59 Stockholm (SE)**

(56) References cited:
**US-A1- 2003 156 561     US-A1- 2004 253 955**
**US-A1- 2004 253 955**

• **MARVELL: "UE Dynamic Reconfiguration in Dedicated Channel and HSDPA Scenarios", 3GPP DRAFT; R4-070838, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Kobe, Japan; 20070511, 11 May 2007 (2007-05-11), XP050177306, [retrieved on 2007-05-11]**
• **MARVELL: 'UE Dynamic Reconfiguration in Dedicated Channel and HSDPA Scenarios' 3GPP TSG RAN WG4 MEETING #43, KOBE, JAPAN vol. R4-070838, 07 May 2007 - 11 May 2007, XP003024067**

**Description**

TECHNICAL FIELD

The present invention relates to methods and arrangements in a cellular telecommunication system. In particular, it relates to a user equipment having at least two receiver branches, a radio base station and methods thereof for dynamic user equipment receiver reconfiguration.

BACKGROUND

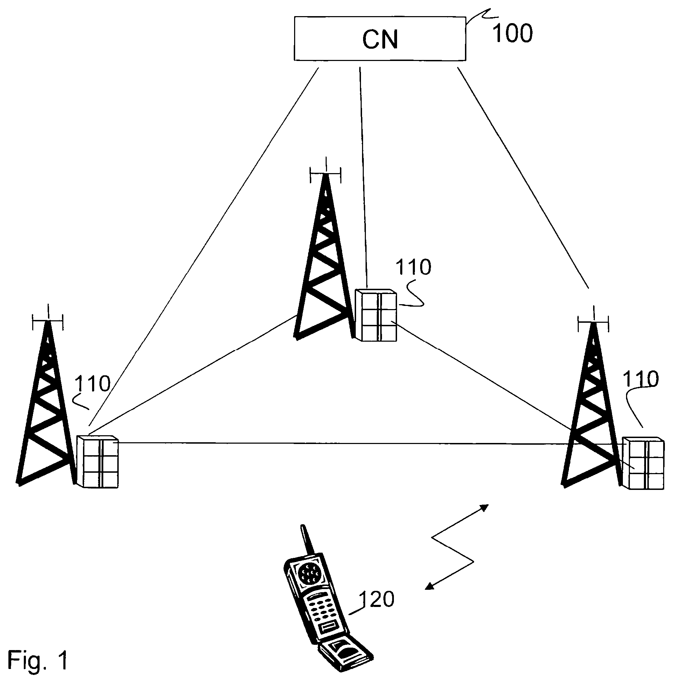

A cellular telecommunication system comprises typically user equipments (UE) 120 wirelessly connected to radio base stations 110 as illustrated in figure 1. The radio network architecture may vary one technology to another. In WCDMA the base stations are connected to the radio network controller (RNC). which in turn is connected to the core network. On the other hand in Evolved UTRAN (E-UTRAN), the base stations are directly connected to the core network (CN) since there is no RNC. In addition base stations are also connected to each other primarily for exchanging signalling information. Thus architecture illustrated in figure 1 is one example. In figure 1 the radio base stations 110 are further connected to a core network (CN) 100 which is adapted to interconnect the cellular telecommunication system to other systems. The radio base stations 110 and the UEs 120 are designed for one or more different radio access technologies and their respective radio interfaces are designed accordingly.

The user equipment (UE) 120 can employ multiple receiver branches irrespective of the access technology or radio interface design. Typically there can be two receiver branches at the UE. This is commonly termed as receiver diversity. There are several benefits with receiver diversity such as that the cell coverage is extended, efficient use of transmitted power at the base station is achieved etc. In an additive white Gaussian Noise (AWGN) channel two receiver branches can boost the system capacity by 3 dB. However, multiple branches at the UE can also drain more power, thereby reducing the UE talk time in some scenarios. Therefore, in scenarios where receiver diversity does not lead to any system gain, it is advantageous from the UE battery perspective to switch off its additional receiver branches.

Receiver diversity in a Wideband Code Division Multiple Access (WCDMA) based Universal Mobile Telecommunication System (UMTS) Terrestrial Radio Access Network (UTRAN) is achieved by having a UE receiver comprising two receiver branches. In the standard specifications of the UTRAN, receiver diversity is a UE capability and it is ensured by specifying UE receiver requirements and is called enhanced performance requirements type 1, as described in 3GPP TS 25.101, "User Equipment (UE) radio transmission and reception (FDD)".

The receiver diversity (or type 1 requirements) is specified for number of scenarios in terms of downlink physical channels. The scenarios employing the receiver diversity include High Speed Downlink Packet Access (HSDPA), Multimedia Broadcast Multicast Service (MBMS), dedicated channels and enhanced uplink downlink channels. The physical channels that currently use receiver diversity are: High Speed Physical Downlink Shared Channel (HS-PDSCH) and High Speed Signalling Control Channel (HS-SCCH) for HSDPA scenario, Dedicated Physical Channel (DPCH) and Dedicated Physical Control Channel (DPCCH) for the Dedicated Channel (DCH) scenario, MBMS Traffic Channel (MTCH) for MBMS scenario and Enhanced Relative Grant Channel (E-RGCH), Enhanced Hybrid Indication Channel (E-HICH) and Enhanced Absolute Grant Channel (E-AGCH) for the Enhanced Uplink (EUL) scenario. See 3GPP TS 25.101. "User Equipment (UE) radio transmission and reception (FDD)". There are also other types of enhanced receiver requirements, which require the UE to implement more than one receiver. Further enhancement i.e. a receiver with more than two receiver branches is possible in future development of WCDMA based systems.

In Evolved UTRAN (E-UTRAN), which is described in 3GPP TS 25.912, "Feasibility study for evolved Universal Terrestrial Radio Access (UTRA) and Universal Terrestrial Radio Access Network (UTRAN)", receiver diversity at the UE is likely to be employed as the minimum requirements or as a mandatory feature. Thus an E-UTRAN UE will use at least two receiver branches to receive all channels in all scenarios. In future E-UTRAN systems the UE could also have more than two receiver branches.

As mentioned above one implication of receiver diversity is an increase in power consumption in some scenarios but not in all. In such scenarios, where UE power consumption increases and the network does not sufficiently benefit from having receiver diversity active all the time, it is advantageous from the UE perspective to switch off one of its receiver branches if radio conditions are favorable. On the other hand, the UE should switch on both receiver branches when radio conditions deteriorate. This switching on and off of receiver diversity in response to the radio conditions is called dynamic reconfiguration of UE enhanced receiver in 3GPP terminology, which is further described in 3GPP TR 25.906, "Dynamically reconfiguring a Frequency Division Duplex (FDD) User Equipment (UE) receiver to reduce power consumption when desired".

In the following, different scenarios for dynamic UE receiver reconfiguration is being described.

In 3GPP, so far point to multipoint MBMS scenario has been identified, where the dynamic reconfiguration of enhanced receiver in good radio conditions does not adversely impact the system performance. This is due to the fact that point to multipoint MBMS delivery is carried out by fixed transmission power level. This implies that when the UE moves close to the base station or when it enters in good radio conditions, the UE can switch off its enhanced receiver (i.e. one of its branches), while still maintaining an adequate reception quality of the desired MBMS service.

Another scenario where dynamic receiver reconfiguration can be applied is HSDPA reception case, which is discussed in 3GPP R4-060415," Discussion on the possibility of dynamically reconfiguring the receiver of a UE which supports enhanced performance requirements", R4-070942, "Simulations Results for Receive Diversity Switching in Non-MBMS Scenario", and in R4-070941, "Regarding Receive Diversity Switching for Non-MBMS Scenarios". The HSDPA downlink transmission is characterized by two channels: HS-SCCH and HS-PDSCH. The resource allocation and data transmission take place on the HS-SCCH and the HS-PDSCH channels respectively. The UE is also allocated the DPCH or the Fractional-DPCH (F-DPCH) to send higher layer signalling, pilot symbols and/or to run power control. The UE is allocated either DPCH or F-DPCH at a time. In addition, the UE is required to maintain certain quality target on DPCH/F-DPCH, wherein the quality target is signaled by the network.

In this scenario the channel dependent scheduling makes use of favorable radio conditions to increase user throughput. With the introduction receiver diversity at the UE the channel dependent scheduling in good radio conditions will further improve the user throughput. Moreover, high data rate transmission during a scheduling turn would require a UE with receiver diversity switched on all the time, to be scheduled less often as compared to the one with a single branch. Therefore, the average UE power consumption may not significantly increase in the HSDPA scenario in case receiver diversity is active consistently.

In the following, the Channel Quality Indicator (CQI) and its applications in this scenario will be described. In the HSDPA scenario the network performs resource allocation (or fast scheduling) in the downlink by taking into consideration the reported CQI values from the UE. The CQI measurement is derived from the Signal To Interference and Noise Ratio (SINR) measured on Common Pilot Channel (CPICH) (or measured on a common reference or pilot symbols). In very good radio conditions the SINR can be very high. In that case the UE may derive a very large CQI value, i.e. the measured CQI ($CQI_M$) may exceed a maximum allowed reportable value ($CQI_{MAX}$). Obviously such a value cannot be reported so UE will report the CQI as follows:

$$\text{Reported CQI} = \text{MIN} (CQI_M, CQI_{MAX})$$

The CQI dynamic range (i.e. minimum, maximum and the granularity) is specified in the standard specification 3GPP TS 25.214, "Physical layer procedures (FDD)". The reported values and the ranges are defined for different UE categories in 3GPP TS 25.306, "UE Radio Access capabilities" and in 3GPP TS 36.211, "Evolved Universal Terrestrial Radio Access (E-UTRA); Physical channels and modulation". The UE categories are e.g. defined in terms of modulation type (e.g. QPSK, 16 QAM, 64 QAM etc) and maximum channelization codes that the UE can support.

The network can use the CQI and it can combine it with other information for performing other radio resource tasks. As one example, the CQI can be used for performing power control on the shared data channel (HS-PDSCH), signaling channel (HS-SCCH) or on any other channel. The network can also use the CQI for handover triggering. It is therefore important that UE is able to report the entire dynamic range of the CQI.

Another scenario is that of the DCH, where it is argued that when downlink code channel power at the base station operates at its minimum level the UE should be allowed to switch off its enhanced receiver, i.e. it switches to one single branch. This is discussed in R4-070942, "Simulations Results for Receive Diversity Switching in Non-MBMS Scenario" and in R4-070941, "Regarding Receive Diversity Switching for Non-MBMS Scenarios".

A number of criteria are proposed for enhanced receiver reconfigurations for the HSDPA scenario as described below.

One criterion is based on threshold associated with Common Pilot Channel (CPICH) measurements; there are two such measures: CPICH Ec/Io (Pilot Strength which is the ratio of received pilot energy, Ec, to total received energy or the total power spectral density, Io) and CPICH Received Signal Code Power (RSCP). According to this criterion, the UE compares the measured CPICH Ec/Io or the CPICH RSCP with a threshold. If the measured quantity is greater than the threshold the UE switches off the enhanced receiver. The threshold is proposed to be signaled by the network to the UE.

The problem with this method is that the threshold may be different for each service. This means that whenever the network changes the service, it has to signal the new threshold. Secondly even with the threshold approach the network may not fully make efficient use of HSDPA power because this will prohibit the UE from reporting the best possible CQI.

A further criterion is based on network explicit signaling. In this method the network explicit signals or indicates the UE to switch off or on its enhanced receiver. This method involves lot of signalling since this has to be sent continuously all the time when UE is receiving data. Secondly the network will send this signalling in response to some CQI or other UE measurement reports. The indication is thus based on the past radio conditions but due to fading the conditions change quickly. This means the network indication may be misleading in some cases and could prevent efficient channel dependent scheduling.

A further criterion is based on geometry factors. The geometry factor (G.F) is the ratio of total power received from the serving cell to the sum of power and noise received from all neighbor cells. This is further described in R4-070942 "Simulations Results for Receive Diversity Switching in Non-MBMS Scenarios". Firstly G.F has to be signaled by the network which involves overheads. Secondly the thresholds can be different for different services as in the scheme described above in conjunction with the criteria based on CPICH level threshold.

This approach may not always ensure that UE fulfils other requirements, e.g. Block error rate (BLER) target on the associated dedicated channel.

A yet further criterion is based on the service type. This is to exploit the fact that some services may not make use of CQI greater than certain value. This is particularly true for low and medium bit rate services. For instance VoIP typically may require a maximum CQI of 10. In other words the quality of service target corresponds to CQI = 10 in this example. Thus the UE will reconfigure its receiver (i.e. switch to single branch) till the time it can fulfill the quality of service requirements of the active service. In the above example the UE may switch to a single branch when the measured CQI exceeds 10. Obviously the problem with this method is that on the average the UE will report a worse CQI compared to the scenario where both branches are used continuously. This is because the single branch will be used for CQI estimation whenever the CQI exceeds the target level (e.g. 10). But as explained earlier CQI larger than the desired target value is equally useful for various radio resource management functions, e.g. power control, triggering of handover based on absolute thresholds (CQI based threshold) from the serving cell.

US 2004/253955 also describes solutions for switching off receiver branches based on channel quality measurements.

In all the above solutions the main problem is that due to the use of single branch, from time to time the UE on the average will report a lower CQI compared to the normal receiver diversity scenario in which both branches are used continuously.

SUMMARY

Therefore, the aim of the present invention is to provide methods and arrangements for an improved dynamic receiver reconfiguration.

According to a first aspect, a method for a user equipment is provided. The UE has a receiver with at least two receiver branches, capable of measuring or estimating a first channel quality of at least one downlink channel derived from SINR measurements in relation to a reference channel. It is first determined whether a first condition is fulfilled where said first condition is fulfilled when a difference between a measured or estimated first channel quality and a predefined maximum reportable channel quality indicator value is greater than or equal to a first threshold ($\Upsilon_1$). Then at least one receiver branch for the reception of the at least one downlink channel is switched off provided that the first condition is fulfilled.

According to a second aspect, a UE having a receiver with at least two receiver branches, capable of measuring or estimating a first channel quality of at least one downlink channel is provided. The UE comprises means for determining whether a first condition is fulfilled. Said first condition is fulfilled when a difference between a measured or estimated first channel quality and a predefined maximum reportable channel quality indicator value is greater than or equal to a first threshold ($\Upsilon_1$). The UE further comprises means for switching off at least one receiver branch for the reception of the at least one downlink channel provided that the first condition is fulfilled.

According to a third aspect, a method for a radio base station in a radio network is provided. The base station is capable of communicating with a UE having a receiver with at least two receiver branches, capable of measuring or estimating a first channel quality of at least one downlink channel. The method comprises the step of signaling to said user equipment a first threshold ($\Upsilon_1$). The first threshold ($\Upsilon_1$) is to be used in the user equipment for determining whether at least one receiver branch should be switched off for the reception of the at least one downlink channel, wherein at least one receiver branch should be switched off for the reception of the at least one downlink channel provided that a first condition is fulfilled. Said first condition is fulfilled when a difference between a measured or estimated first channel quality and a predefined maximum reportable channel quality indicator value is greater than or equal to a first threshold ($\Upsilon_1$).

According to a fourth aspect, a radio base station in a radio network is provided. Said base station is capable of communicating with a UE having a receiver with at least two receiver branches, capable of measuring or estimating a first channel quality of at least one downlink channel. The radio base station comprises means for signaling to the user equipment a first threshold ($\Upsilon_1$) to be used in the user equipment for determining whether at least one receiver branch should be switched off for the reception of the at least one downlink channel, wherein at least one receiver branch should be switched off for the reception of the at least one downlink channel provided that a first condition is fulfilled. Said first condition is fulfilled when a difference between a measured or estimated first channel quality and a predefined maximum reportable channel quality indicator value is greater than or equal to a first threshold ($\Upsilon_1$).

Thus, the UE switches off one or more branches of its enhanced receiver if its estimated channel quality indicator, e.g. CQI, exceeds the maximum reportable channel quality indicator value by a certain threshold. The overall effect is that UE is able to save its battery without adversely affecting the network performance or wastage of network resources, but at the same time is able to report all possible CQI values as specified in the standard. This gives full freedom to the network in terms of using CQI over the entire dynamic range for various purposes while still allowing UE to save its battery.

An advantage is that the network will have full freedom to do power control on shared channels.

**Brief Description of the Drawings**

 **Fig. 1** illustrates a cellular telecommunication network wherein the present invention may be implemented.
 **Figs. 2a and 2b** illustrate methods according to embodiments of the present invention.
 **Fig. 3** illustrates a UE and a radio base station according to embodiments of the present invention.

**DETAILED DESCRIPTION**

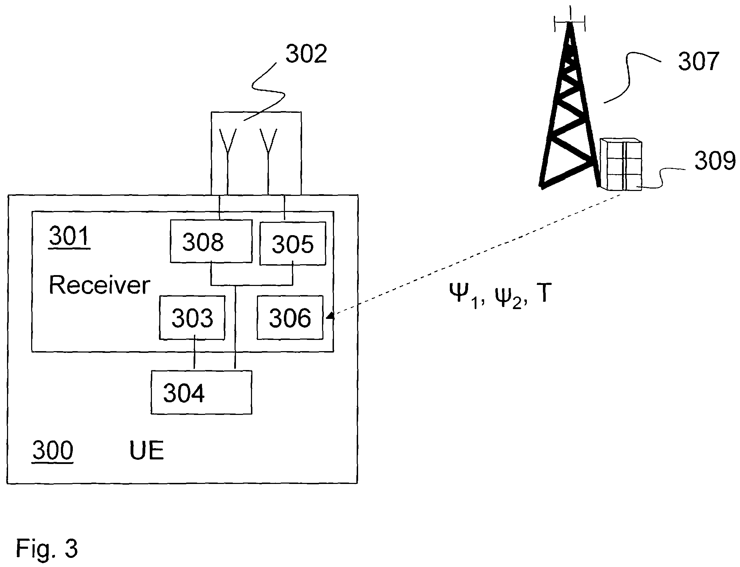

In the following, various embodiment of the invention will be described. It should be understood that the references to CQI is to be construed as any type of channel quality reports provided by the user equipment. Hence the present invention relates to a user equipment (UE) and a method thereof, wherein the UE has a receiver with at least two receiver branches as illustrated in **figure 3.** The UE is capable of measuring or estimating and reporting a first channel quality of at least one downlink channel e.g. derived from SINR measurements in relation to a reference channel.

The basic idea of the present invention is to switch off at least one receiver branch for the reception of at least one downlink channel when it is determined that receiver diversity is less beneficial in order to save battery power. In accordance with the present invention, the receiver branch is switched off when a difference between a measured or estimated first channel quality and a predefined maximum reportable channel quality indicator value is greater than or equal to a first threshold ($\Upsilon_1$). The first channel quality may be the CQI, and the CQI may be measured instantaneous or an average value measured over a pre-defined time period.

In the following different embodiments of the present invention will now be described.

Let $CQI_M$ be the instantaneous measured or estimated CQI value. Let $CQI_{MAX}$ be the maximum possible CQI value that the UE is allowed to report. This is specified in the standard specification TS 25.214. Let $\Upsilon_1$ ($\Upsilon_1 > 0$) denote the first threshold and $\Upsilon_2$ ($\Upsilon_2 > 0$) a second threshold, which can either be specified, signaled by the network or UE implementation based. These thresholds could be different or could also have the same value.

The UE switches off one or more of its enhanced receiver branches for the reception of HSDPA channels (HS-PDSCH or HS-SCCH or both) and/or other channels (e.g. DPCH, downlink channels related to enhanced uplink: E-HICH, E-RGCH, E-AGCH etc) when a difference between a measured first channel quality and a predefined maximum reportable channel quality indicator value is greater than or equal to a first threshold ($\Upsilon_1$) according to equation (1).

$$CQI_M - CQI_{MAX} \geq \Upsilon_1 \qquad (1)$$

Similarly the UE switches on at least one previously inactived receiver branches (i.e. previously switched off receiver branches are re-activated) for the reception of HSDPA channels (HS-PDSCH or HS-SCCH or both) and/or other channels (e.g. DPCH, downlink channels related to enhanced uplink: E-HICH, E-RGCH, E-AGCH etc) provided that the difference between the measured first channel quality and the maximum reportable channel quality indicator value is below a second threshold ($\Upsilon_2$) according to eq. [2].

$$CQI_M - CQI_{MAX} < \Upsilon_2 \qquad (2)$$

The receiver switching decision at the UE can also be based on an average CQI value ($CQI_{ave\_M}$) measured over a certain time period.

Thus the UE switches off one or more of its enhanced receiver branches for the reception of HSDPA channels (HS-PDSCH or HS-SCCH or both) and/or other channels (e.g. DPCH, downlink channels related to enhanced uplink: E-HICH, E-RGCH, E-AGCH etc) provided the following condition is met:

$$CQI_{ave\_M} - CQI_{MAX} \geq \Upsilon_1 \qquad (3)$$

Similarly the UE switches on its enhanced receiver for the reception of HSDPA channels (HS-PDSCH or HS-SCCH or both) and/or other channels (e.g. DPCH, downlink channels related to enhanced uplink: E-HICH, E-RGCH, E-AGCH etc) provided that the following condition is fulfilled:

$$CQI_{ave\_M} - CQI_{MAX} < \Upsilon_2 \qquad (4)$$

In equations (3) and (4) the $CQI_{ave\_M}$ is obtained by taking an average of the measured or estimated CQI over a certain period (T). The value (T) could be UE implementation dependent or it could also be specified or signaled to the UE by the network.

The downlink HSDPA transmission is always accompanied with an associated dedicated channel (DPCH) or fractional DPCH (F-DPCH). The purpose of the associated DPCH or F-DPCH is to transmit information such as higher layer signalling, pilot symbols or power control commands. The UE is supposed to maintain certain quality target signalled by the network. The receiver reconfiguration based solely on DPCH/F-DPCH quality target is prior art.

However, the methods described in the sections covering reconfiguration based on instantaneous or average measured CQI could be combined with the DPCH/F-DPCH quality based methods. Thus, according to an embodiment, the UE switches off one or more receiver branches provided both conditions, i.e. when the difference between the measured or estimated first channel quality and the predefined maximum reportable channel quality indicator value is greater than or equal to the first threshold ($\Upsilon_1$) and when the DPCH/F-DPCH quality target are fulfilled. The advantage of this embodiment is that it will also ensure that the quality target (on DPCH/F-DPCH) is consistently fulfilled even if one or more receiver branches are switched off for HSDPA reception.

Thus the UE switches off one or more of its enhanced receiver branches for the reception of HSDPA channels (HS-PDSCH or HS-SCCH or both) and/or other channels (e.g. DPCH, downlink channels related to enhanced uplink: E-HICH, E-RGCH, E-AGCH etc) provided the following conditions are met:

In case of instantaneous CQI measurement the switching off decision can be based on equation (5):

$$(CQI_M - CQI_{MAX} \geq \Upsilon_1) \text{ AND } (Q_M \leq Q_T) \qquad (5)$$

In case of average CQI measurement the switching off decision can be based on equation (6):

$$(CQI_{ave\_M} - CQI_{MAX} \geq \Upsilon_1) \text{ AND } (Q_M \leq Q_T) \qquad (6)$$

In (5) and (6), $Q_M$ and $Q_T$ are defined as follows:

• The parameter, $Q_M$ is the measured downlink quality of the downlink DPCH or F-DPCH channels associated with HSDPA reception at the UE. The measured quality $Q_M$ is typically expressed in terms of BLER or Frame Error Rate (FER) in case of DPCH or Transmit Power Commands (TPC) command error rate in case of F-DPCH. The parameter $Q_T$ is generally measured over a certain measurement period; the smallest duration can be the duration corresponding to one interleaving period (i.e. one Transmission Time Interval (TTI)). In very good radio conditions the $Q_M$ i.e. the BLER can become much lower, at least for a certain period of time.

• The parameter, $Q_T$ is the network signaled quality target corresponding to the downlink DPCH or F-DPCH channels associated with HSDPA reception at the UE. The parameter $Q_T$ is typically expressed in terms of BLER or FER in case of DPCH or TPC command error rate in case of F-DPCH.

The switching 'on' decision i.e. the activation of one or more of the currently inactive receiver branches does not require any checking of DPCH/F-DPCH quality measurements. This is because the UE by the virtue of outer loop power control is supposed to maintain the DPCH/F-DPCH quality target all the time, i.e. irrespective of the receiver configuration state. Thus switching on decisions corresponding to equations (5) and (6) will be performed according to equations (2) and (4) respectively.

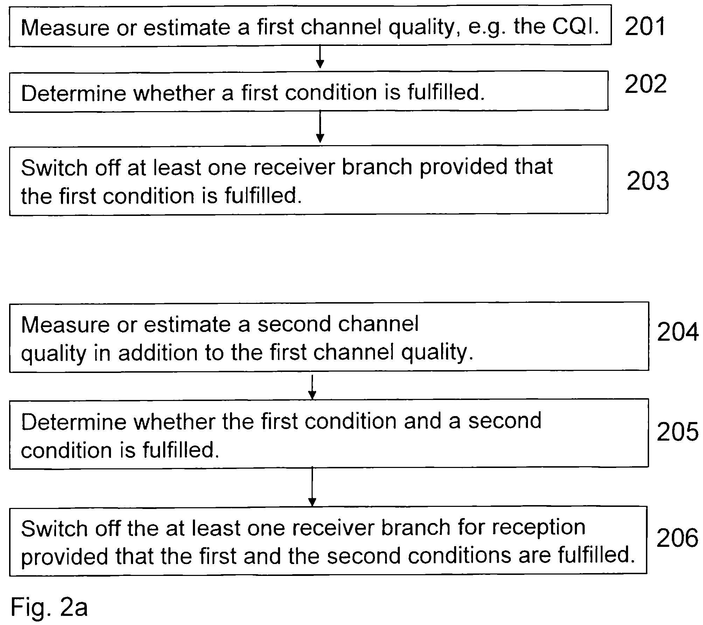

**Figure 2a** is a flowchart illustrating the method of a UE according to the above described embodiments.

201. Measure or estimate a first channel quality, e.g. the CQI.

202. Determine whether a first condition is fulfilled where said first condition is fulfilled when a difference between a measured or estimated first channel quality and a predefined maximum reportable channel quality indicator value is greater than or equal to a first threshold (Yi).

203. Switch off at least one receiver branch for the reception of the at least one downlink channel provided that the first condition is fulfilled.
The following steps illustrate an alternative embodiment according to the present invention.

204. Measure or estimate a second channel quality in addition to the first channel quality.

205. Determine whether the first condition and a second condition is fulfilled, wherein the second condition is fulfilled when a measured or estimated second channel quality is equal to or below a network signaled quality target.

206. Switch off the at least one receiver branch for the reception of at least one downlink channel provided that the first condition and the second condition are fulfilled.

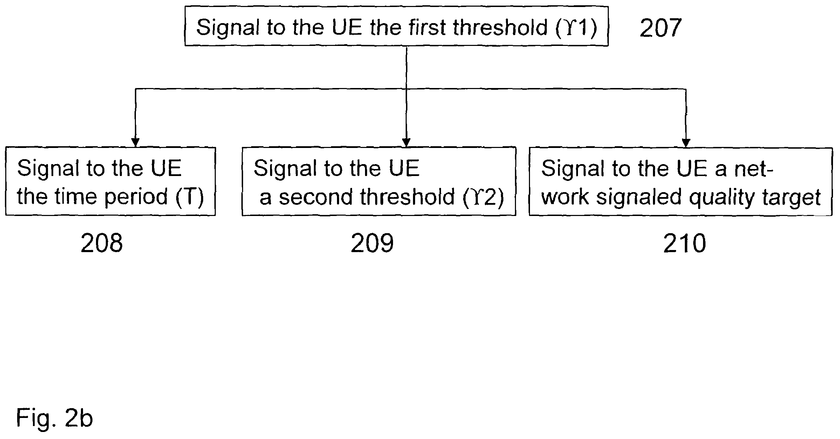

**Figure 2b** is a flowchart illustrating the method of a radio base station according to the above described embodiments.

207. Signal to said user equipment a first threshold ($\Upsilon_1$) to be used in the user equipment for determining whether at least one receiver branch should be switched off for the reception of the at least one downlink channel.

208. Signal to said user equipment a time period (T) to be used for measuring an average value of the first channel quality.

209. Signal to said user equipment a second threshold ($\Upsilon_2$) to be used for the UE to determine whether at least one receiver branch should be switched off for the reception of the at least one downlink channel, wherein at least one receiver branch should be switched off provided that the first condition and a second condition are fulfilled, wherein the second condition is fulfilled when a measured or estimated second channel quality is equal to or below a network signaled quality target.

210. Signal to said user equipment a network signaled quality target to be used for the UE to determine whether at least one receiver branch should be switched off for the reception of the at least one downlink channel.

The methods may be applied in user equipments and radio base stations supporting e.g. a WCDMA based system, a CDMA2000 system or an E-UTRAN system.
Turning now to **figure 3** illustrating schematically a UE and a radio base station according to embodiments of the present invention.
The UE 300 comprises a receiver 301 with at least two receiver branches 302. The receiver comprises means for reporting, measuring or estimating 303 a first channel quality of at least one Downlink channel e.g. derived from SINR measurements in relation to a reference channel and a second channel quality which is a downlink channel quality measured on a received dedicated or UE specific channel. The UE comprises further means for determining 304 whether a first condition is fulfilled where said first condition is fulfilled when a difference between a measured or estimated first channel quality and a predefined maximum reportable channel quality indicator value is greater than or equal to a first threshold ($\Upsilon_1$), and whether a second condition is fulfilled wherein the second condition is fulfilled when a measured or estimated second channel quality is equal to or below a network signaled quality target. Means are also provided for switching off 305 at least one receiver branch for the reception of the at least one downlink channel provided that the first or the first and the second condition is fulfilled.
In accordance with a further embodiment the UE comprises means for switching on 308 at least one previously inactivated receiver branch for the reception of at least one of the downlink channels provided that the difference between the measured first channel quality and the maximum reportable channel quality indicator value is below a second threshold ($\Upsilon_2$).
The UE also comprises means for receiving 306 the time period (T) if the first channel quality is measured as an average channel quality over the time period (T) and the first and second thresholds from the radio base station 307 according to embodiments of the invention.
Accordingly, the radio base station 307 comprises means for sending the time period (T) if the first channel quality is measured as an average channel quality over the time period (T) and the first and second thresholds in accordance with embodiments of the invention.

In E-UTRAN, the UE receiver will have more than one branch (at least two receivers). The data transmission would also be performed by the shared data channel, which requires the reporting of the CQI. Therefore, in case the measured CQI ($Q_M$) is larger than the maximum reportable CQI by a certain threshold, the UE could reconfigure its receiver dynamically. Therefore the present invention is applicable to the E-UTRAN as well.

The invention should not be construed as limited to the examples described in the foregoing. The invention is applicable to any system where the resource allocation is based on some sort of channel quality (e.g. CQI) reported by the UE. The scope of the invention is defined by the appended claims.

**Claims**

1. A method for a user equipment (300) having a receiver with at least two receiver branches, (302) capable of measuring or estimating a first channel quality of at least one downlink channel, **characterized by** the steps of:

   - determining whether a first condition is fulfilled where said first condition is fulfilled when a difference between a measured or estimated first channel quality and a predefined maximum reportable channel quality indicator value is greater than or equal to a first threshold ($\Upsilon_1$), where $\Upsilon_1 > 0$, and
   - switching off at least one receiver branch for the reception of the at least one downlink channel provided that the first condition is fulfilled.

2. The method according to claim 1, wherein the measured first channel quality is measured as an instantaneous value.

3. The method according to claim 1, wherein the measured first channel quality is measured as an average channel quality over a certain time period (T).

4. The method according to claim 3, wherein the time period (T) is received by the user equipment from the network.

5. The method according to any of claims 1-4, wherein the said first threshold ($\Upsilon_1$) is received by the user equipment from the network.

6. The method according to any of claims 1-5, wherein said UE furthermore is capable of measuring or estimating a second channel quality, which is a downlink channel quality measured on a received dedicated or UE specific channel, comprising the further steps of:

   - determining whether a second condition is fulfilled wherein the second condition is fulfilled when a measured or estimated second channel quality is equal to or below a network signaled quality target, and
   switching off the at least one receiver branch for the reception of at least one downlink channel provided that the first condition and the second condition are fulfilled.

7. The method according to claim 6, wherein the network signaled quality target is expressed in terms of block or frame error rate.

8. The method according to claim 6, wherein the network signaled quality target is expressed in terms of pilot or transmit power control command error rate.

9. The method according to any of claims 1 - 8, comprising the step of switching on at least one previously inactivated receiver branch for the reception of at least one of the downlink channels provided that the difference between the measured first channel quality and the maximum reportable channel quality indicator value is below a second threshold ($\Upsilon_2$), where $\Upsilon_2 > 0$ .

10. The method according to claim 9, wherein the certain threshold ($\Upsilon_2$) is received by the user equipment from the network.

11. A user equipment, UE, (300) having a receiver with at least two receiver branches, (302) capable of measuring or estimating a first channel quality of at least one downlink channel, **characterized by** means for determining whether a first condition is fulfilled where said first condition is fulfilled when a difference between a measured or estimated first channel quality and a predefined maximum reportable channel quality indicator value is greater than or equal to a first threshold ($\Upsilon_1$), where $\Upsilon_1 > 0$, and means for switching off at least one receiver branch for the reception of the at least one downlink channel provided that the first condition is fulfilled.

12. A method for a radio base station (307) in a radio network, said base station is capable of communicating with a User Equipment (300) having a receiver with at least two receiver branches, (302) capable of measuring or estimating a first channel quality of at least one downlink channel, **characterized by** the step of signaling to said user equipment a first threshold ($\Upsilon_1$), where $\Upsilon_1 > 0$, to be used in the user equipment for determining whether at least one receiver branch should be switched off for the reception of the at least one downlink channel, wherein at least one receiver branch should be switched off for the reception of the at least one downlink channel provided that a first condition is fulfilled, where said first condition is fulfilled when a difference between a measured or estimated first channel quality and a predefined maximum reportable channel quality indicator value is greater than or equal to said first threshold ($\Upsilon_1$).

13. The method according to claim 12, comprising the step of signaling to said user equipment a time period (T) to be used for measuring an average value of the first channel quality.

14. The method according to any of claims 12-13, wherein said radio base station is capable of communicating with said UE that is furthermore capable of measuring or estimating a second channel quality, which is a downlink channel quality measured or estimated on a received dedicated or user equipment specific channel, the method comprises the step of signaling to said user equipment a network signaled quality target, to be used for the UE to determine whether at least one receiver branch should be switched off for the reception of the at least one downlink channel, wherein at least one receiver branch should be switched off provided that the first condition and a second condition are fulfilled, wherein the second condition is fulfilled when a measured or estimated second channel quality is equal to or below the network signaled quality target.

15. The method according to claim 14, wherein the network signaled quality target is expressed in terms of block or frame error rate.

16. The method according to claim 14, wherein the network signaled quality target is expressed in terms of pilot or transmit power control command error rate.

17. The method according to any of claims 12-16, comprising the step of signaling to said user equipment a second threshold ($\Upsilon_2$), where $\Upsilon_2 > 0$, to be used for the UE to determine whether at least one receiver branch should be switched on for the reception of the at least one downlink channel, wherein at least one receiver branch should be switched on provided that the difference between the measured or estimated first channel quality and the predefined maximum reportable channel quality indicator value is below said second threshold ($\Upsilon_2$).

18. A radio base station (307) for a radio network, said base station is capable of communicating with a User Equipment (300) having a receiver with at least two receiver branches, (302) capable of measuring or estimating a first channel quality of at least one downlink channel, **characterized by** means for signaling to the user equipment a first threshold ($\Upsilon_1$), where $\Upsilon_1 > 0$, to be used in the user equipment for determining whether at least one receiver branch should be switched off for the reception of the at least one downlink channel, wherein at least one receiver branch should be switched off for the reception of the at least one downlink channel provided that a first condition is fulfilled, where said first condition is fulfilled when a difference between a measured or estimated first channel quality and a predefined maximum reportable channel quality indicator value is greater than or equal to said first threshold ($\Upsilon_1$).

**Patentansprüche**

1. Verfahren für ein Endgerät (300),
das einen Empfänger mit mindestens zwei Empfangszweigen (302) hat,
die geeignet sind, eine erste Kanalqualität mindestens eines Downlink-Kanals zu messen oder zu schätzen, **gekennzeichnet durch** die folgenden Schritte:

- Ermitteln, ob eine erste Bedingung erfüllt wird, wobei die erste Bedingung erfüllt wird, wenn eine Differenz zwischen einer gemessenen oder geschätzten ersten Kanalqualität und einem vorgegebenen zu meldenden Indikationswert für die Kanalhöchstqualität, der größer oder gleich einer ersten Schwelle ($\Upsilon_1$) ist, wobei $\Upsilon_1 > 0$,

und

- Abschalten mindestens eines Empfangszweigs für den Empfang des mindestens einen Downlink-Kanals, vorausgesetzt, dass die erste Bedingung erfüllt ist.

2. Verfahren nach Anspruch 1, wobei die gemessene erste Kanalqualität als ein Istwert gemessen wird.

3. Verfahren nach Anspruch 1, wobei die gemessene erste Kanalqualität als eine durchschnittliche Kanalqualität über einen bestimmten Zeitraum (T) gemessen wird.

4. Verfahren nach Anspruch 3, wobei das Endgerät den Zeitraum (T) vom Netzwerk empfängt.

5. Verfahren nach einem der Ansprüche 1 bis 4, wobei das Endgerät die erste Schwelle ($\Upsilon_1$) vom Netzwerk empfängt.

6. Verfahren nach einem der Ansprüche 1 bis 5, wobei das Endgerät ferner geeignet ist, eine zweite Kanalqualität zu messen oder zu schätzen, die eine Downlink-Kanalqualität ist, die auf einem empfangenen dazugehörigen oder Endgerät-spezifischen Kanal gemessen wird, die folgenden weiteren Schritte umfassend:

- Ermitteln, ob eine zweite Bedingung erfüllt wird, wobei die zweite Bedingung erfüllt wird, wenn eine gemessene oder geschätzte zweite Kanalqualität gleich oder kleiner als ein vom Netzwerk signalisiertes Qualitätsziel ist, und
- Abschalten des mindestens einen Empfangszweigs für den Empfang mindestens eines Downlink-Kanals, vorausgesetzt, dass die erste Bedingung und die zweite Bedingung erfüllt werden.

7. Verfahren nach Anspruch 6, wobei das vom Netzwerk signalisierte Qualitätsziel in einer Block- oder Frame-Error-Rate ausgedrückt wird.

8. Verfahren nach Anspruch 6, wobei das vom Netzwerk signalisierte Qualitätsziel in einer Steuergerät- oder Sendeleistungssteuersignal-Fehlerrate ausgedrückt wird.

9. Verfahren nach einem der Ansprüche 1 bis 8, umfassend den Schritt des Anschaltens mindestens eines zuvor inaktivierten Empfangszweigs für den Empfang mindestens eines der Downlink-Kanäle, vorausgesetzt, dass die Differenz zwischen der gemessenen ersten Kanalqualität und dem zu meldenden Indikationswert für die Kanalhöchstqualität unter einer zweiten Schwelle ($\Upsilon_2$) liegt, wobei $\Upsilon_2 > 0$.

10. Verfahren nach Anspruch 9, wobei das Endgerät die bestimmte Schwelle ($\Upsilon_2$) vom Netzwerk empfängt.

11. Endgerät (300), das einen Empfänger mit mindestens zwei Empfangszweigen (302) hat, die geeignet sind, eine erste Kanalqualität mindestens eines Downlink-Kanals zu messen oder zu schätzen, **gekennzeichnet durch** Mittel zum Ermitteln, ob eine erste Bedingung erfüllt wird, wobei die erste Bedingung erfüllt wird, wenn eine Differenz zwischen der gemessenen oder geschätzten ersten Kanalqualität und einem vorgegebenen zu meldenden Indikationswert für die Kanalhöchstqualität größer oder gleich einer ersten Schwelle ($\Upsilon_1$) ist, wobei $\Upsilon_1 > 0$, und Mittel zum Abschalten mindestens eines Empfangszweiges für den Empfang des mindestens einen Downlink-Kanals, vorausgesetzt, dass die erste Bedingung erfüllt wird.

12. Verfahren für eine Funkbasisstation (307) in einem Funknetz, wobei die Basisstation geeignet ist, mit einem Endgerät (300) zu kommunizieren, das einen Empfänger mit mindestens zwei Empfangszweigen (302) hat, die geeignet sind, eine erste Kanalqualität mindestens eines Downlink-Kanals zu messen oder zu schätzen, **gekennzeichnet durch** den Schritts des Signalisierens einer ersten Schwelle ($\Upsilon_1$) an das Endgerät, wobei $\Upsilon_1 > 0$, die im Endgerät zum Ermitteln verwendet werden soll, ob mindestens ein Empfangszweig für den Empfang des mindestens einen Downlink-Kanals abgeschaltet werden sollte, wobei mindestens ein Empfangszweig für den Empfang des mindestens einen Downlink-Kanals abgeschaltet sein sollte, vorausgesetzt, dass eine erste Bedingung erfüllt wird, wobei die erste Bedingung erfüllt wird, wenn eine Differenz zwischen einer gemessenen oder geschätzten ersten Kanalqualität und einem vorgegebenen zu meldenden Indikationswert für die Kanalhöchstqualität größer oder gleich einer ersten Schwelle ist ($\Upsilon_1$).

13. Verfahren nach Anspruch 12, umfassend den Schritt des Signalisierens eines Zeitraums (T) an das Endgerät, der zum Messen eines Durchschnittswerts der ersten Kanalqualität verwendet werden soll.

14. Verfahren nach einem der Ansprüche 12 bis 13, wobei die Funkbasisstation zum Kommunizieren mit dem Endgerät geeignet ist, das ferner geeignet ist, eine zweite Kanalqualität zu messen oder zu schätzen, die eine Downlink-Kanalqualität ist, die auf einem empfangenen dazugehörigen oder Endgerät-spezifischen Kanal gemessen oder geschätzt wird, wobei das Verfahren den Schritt des Signalisierens eines vom Netzwerk signalisierten Qualitätsziels an das Endgerät umfasst, das für das Endgerät verwendet werden soll, um zu ermitteln, ob mindestens ein Empfangszweig für den Empfang des mindestens einen Downlink-Kanals abgeschaltet werden sollte, wobei mindestens ein Empfangszweig abgeschaltet sein sollte, vorausgesetzt, dass die erste Bedingung und eine zweite Bedingung erfüllt werden, wobei die zweite Bedingung erfüllt wird, wenn eine gemessene oder geschätzte zweite Kanalqualität gleich oder kleiner als das vom Netzwerk signalisierte Qualitätsziel ist.

15. Verfahren nach Anspruch 14, wobei das vom Netzwerk signalisierte Qualitätsziel in einer Block- oder Frame-Error-Rate ausgedrückt wird.

16. Verfahren nach Anspruch 14, wobei das vom Netzwerk signalisierte Qualitätsziel in einer Steuergerät- oder Sendeleistungssteuersignal-Fehlerrate ausgedrückt wird.

17. Verfahren nach einem der Ansprüche 12 bis 16, umfassend den Schritt des Signalisierens einer zweiten Schwelle $\Upsilon_2$), wobei $\Upsilon_2 > 0$, an das Endgerät , die für das Endgerät verwendet werden soll, um zu ermitteln, ob mindestens ein Empfangszweig für den Empfang des mindestens einen Downlink-Kanals angeschaltet werden sollte, wobei mindestens ein Empfangszweig angeschaltet sein sollte, vorausgesetzt, dass die Differenz zwischen der gemessenen oder geschätzten ersten Kanalqualität und dem vorgegebenen zu meldenden Indikationswert für die Kanalhöchstqualität unter der zweiten Schelle ($\Upsilon_2$) liegt.

18. Funkbasisstation (307) für ein Funknetz, wobei die Basisstation geeignet ist, mit einem Endgerät (300) zu kommunizieren, das einen Empfänger mit mindestens zwei Empfangszweigen (302) hat, die geeignet sind, eine erste Kanalqualität mindestens eines Downlink-Kanals zu messen oder zu schätzen, **gekennzeichnet durch** Mittel zum Signalisieren einer ersten Schwelle ($\Upsilon_1$) an das Endgerät, wobei $\Upsilon_1 > 0$, die im Endgerät verwendet werden soll, um zu ermitteln, ob mindestens ein Empfangszweig zum Empfang des mindestens einen Downlink-Kanals abgeschaltet werden sollte, wobei mindestens ein Empfangszweig zum Empfang des mindestens einen Downlink-Kanals abgeschaltet sein sollte, vorausgesetzt, dass eine erste Bedingung erfüllt wird, wobei die erste Bedingung erfüllt wird, wenn eine Differenz zwischen der gemessenen oder geschätzten ersten Kanalqualität und einem vorgegebenen zu meldenden Indikationswert für die Kanalhöchstqualität größer oder gleich der ersten Schwelle ($\Upsilon_1$) ist.

**Revendications**

1. Procédé pour un équipement utilisateur (300) comprenant un récepteur avec au moins deux branches de réception (302), capable de mesurer ou d'estimer une première qualité de canal d'au moins un canal de liaison descendante, **caractérisé par** les étapes suivantes :

   - la détermination du fait qu'une première condition est remplie, où ladite première condition est remplie quand une différence entre une première qualité de canal mesurée ou estimée et une valeur d'indicateur de qualité de canal rapportable maximale prédéfinie est supérieure ou égale à un premier seuil ($\gamma_1$), où $\gamma_1 > 0$, et
   - la désactivation d'au moins une branche de réception pour la réception d'au moins un canal de liaison descendante pourvu que la première condition soit remplie.

2. Procédé selon la revendication 1, dans lequel la première qualité de canal mesurée est mesurée comme une valeur instantanée.

3. Procédé selon la revendication 1, dans lequel la première qualité de canal mesurée est mesurée comme une qualité de canal moyenne sur une certaine période de temps (T).

4. Procédé selon la revendication 3, dans lequel la période de temps (T) est reçue par l'équipement utilisateur à partir du réseau.

5. Procédé selon l'une quelconque des revendications 1 à 4, dans lequel ledit premier seuil ($\gamma_1$) est reçu par l'équipement utilisateur à partir du réseau.

6. Procédé selon l'une quelconque des revendications 1 à 5, dans lequel ledit équipement utilisateur est capable en outre de mesurer ou d'estimer une deuxième qualité de canal, qui est une qualité de canal de liaison descendante mesurée sur un canal reçu spécifique à l'équipement utilisateur ou dédié, comprenant les autres étapes suivantes :

- la détermination du fait qu'une deuxième condition est remplie, dans lequel la deuxième condition est remplie quand une deuxième qualité de canal mesurée ou estimée est égale ou inférieure à une cible de qualité signalée par le réseau, et
la désactivation de l'au moins une branche de réception pour la réception d'au moins un canal de liaison descendante pourvu que la première condition et la deuxième condition soient remplies.

7. Procédé selon la revendication 6, dans lequel la cible de qualité signalée par le réseau est exprimée en termes de taux d'erreurs sur les blocs ou les trames.

8. Procédé selon la revendication 6, dans lequel la cible de qualité signalée par le réseau est exprimée en termes de taux d'erreurs sur des instructions de commande de puissance de transmission ou pilote.

9. Procédé selon l'une quelconque des revendications 1 à 8, comprenant l'étape d'activation d'au moins une branche de réception précédemment désactivée pour la réception d'au moins un des canaux de liaison descendante pourvu que la différence entre la première qualité de canal mesurée et la valeur d'indicateur de qualité de canal rapportable maximale soit inférieure à un deuxième seuil ($\gamma_2$), où $\gamma_2 > 0$.

10. Procédé selon la revendication 9, dans lequel le certain seuil ($\gamma_2$) est reçu par l'équipement utilisateur à partir du réseau.

11. Équipement utilisateur, UE, (300) comprenant un récepteur avec au moins deux branches de réception (302), capable de mesurer ou d'estimer une première qualité de canal d'au moins un canal de liaison descendante, **caractérisé par** des moyens pour déterminer si une première condition est remplie, où ladite première condition est remplie quand une différence entre une première qualité de canal mesurée ou estimée et une valeur d'indicateur de qualité de canal rapportable maximale prédéfinie est supérieure ou égale à un premier seuil ($\gamma_1$), où $\gamma_1 > 0$, et des moyens pour désactiver au moins une branche de réception pour la réception de l'au moins un canal de liaison descendante pourvu que la première condition soit remplie.

12. Procédé pour une station de base radio (307) dans un réseau radio, ladite station de base est capable de communiquer avec un équipement utilisateur (300) comprenant un récepteur avec au moins deux branches de réception (302), capable de mesurer ou d'estimer une première qualité de canal d'au moins un canal de liaison descendante, **caractérisé par** l'étape de signalisation audit équipement utilisateur d'un premier seuil ($\gamma_1$), où $\gamma_1 > 0$, à utiliser dans l'équipement utilisateur pour déterminer si au moins une branche de réception devrait être désactivée pour la réception d'au moins un canal de liaison descendante, dans lequel au moins une branche de réception devrait être désactivée pour la réception de l'au moins un canal de liaison descendante pourvu qu'une première condition soit remplie, où ladite première condition est remplie quand une différence entre une première qualité de canal mesurée ou estimée et une valeur d'indicateur de qualité de canal rapportable maximale prédéfinie est supérieure ou égale audit premier seuil ($\gamma_1$).

13. Procédé selon la revendication 12, comprenant l'étape de signalisation audit équipement utilisateur d'une période de temps (T) à utiliser pour mesurer une valeur moyenne de la première qualité de canal.

14. Procédé selon l'une quelconque des revendications 12 à 13, dans lequel ladite station de base radio est capable de communiquer avec ledit équipement utilisateur qui est capable en outre de mesurer ou d'estimer une deuxième qualité de canal, qui est une qualité de canal de liaison descendante mesurée ou estimée sur un canal reçu spécifique à l'équipement utilisateur ou dédié, le procédé comprend l'étape de signalisation audit équipement utilisateur d'une cible de qualité signalée par le réseau, à utiliser pour l'équipement utilisateur pour déterminer si au moins une branche de réception devrait être désactivée pour la réception de l'au moins un canal de liaison descendante, dans lequel au moins une branche de réception devrait être désactivée pourvu que la première condition et la deuxième condition soient remplies, dans lequel la deuxième condition est remplie quand une deuxième qualité de canal mesurée ou estimée est égale ou inférieure à la cible de qualité signalée par le réseau.

15. Procédé selon la revendication 14, dans lequel la cible de qualité signalée par le réseau est exprimée en termes de taux d'erreurs sur les blocs ou les trames.

16. Procédé selon la revendication 14, dans lequel la cible de qualité signalée par le réseau est exprimée en termes de taux d'erreurs sur des instructions de commande de puissance de transmission ou pilote.

17. Procédé selon l'une quelconque des revendications 12 à 16, comprenant l'étape de signalisation audit équipement utilisateur d'un deuxième seuil ($\gamma_2$), où $\gamma_2 > 0$, à utiliser pour l'équipement utilisateur pour déterminer si au moins une branche de réception devrait être activée pour la réception de l'au moins un canal de liaison descendante, dans lequel au moins une branche de réception devrait être activée pourvu que la différence entre la première qualité de canal mesurée ou estimée et la valeur d'indicateur de qualité de canal rapportable maximale prédéfinie est inférieure audit deuxième seuil ($\gamma_2$).

18. Station de base radio (307) pour un réseau radio, ladite station de base est capable de communiquer avec un équipement utilisateur (300) comprenant un récepteur avec au moins deux branches de réception (302), capable de mesurer ou d'estimer une première qualité de canal d'au moins un canal de liaison descendante, **caractérisé par** des moyens pour la signalisation à l'équipement utilisateur d'un premier seuil ($\gamma_1$), où $\gamma_1 > 0$, à utiliser dans l'équipement utilisateur pour déterminer si au moins une branche de réception devrait être désactivée pour la réception de l'au moins un canal de liaison descendante, dans lequel au moins une branche de réception devrait être désactivée pour la réception de l'au moins un canal de liaison descendante pourvu qu'une première condition soit remplie, où ladite première condition est remplie quand une différence entre une première qualité de canal mesurée ou estimée et une valeur d'indicateur de qualité de canal rapportable maximale prédéfinie est supérieure ou égale audit premier seuil ($\gamma_1$).

Fig. 1

EP 2 171 883 B1

| Measure or estimate a first channel quality, e.g. the CQI. | 201 |

↓

| Determine whether a first condition is fulfilled. | 202 |

↓

| Switch off at least one receiver branch provided that the first condition is fulfilled. | 203 |

| Measure or estimate a second channel quality in addition to the first channel quality. | 204 |

↓

| Determine whether the first condition and a second condition is fulfilled. | 205 |

↓

| Switch off the at least one receiver branch for reception provided that the first and the second conditions are fulfilled. | 206 |

Fig. 2a

```
┌─────────────────────────────────────────────────┐
│  Signal to the UE the first threshold (Υ1)       │    207
└─────────────────────────────────────────────────┘
```

| Signal to the UE the time period (T) | Signal to the UE a second threshold (Υ2) | Signal to the UE a network signaled quality target |
|---|---|---|
| 208 | 209 | 210 |

Fig. 2b

307

309

$\Psi_1, \Psi_2, T$

302

305

306

308

303

304

301

Receiver

300   UE

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004253955 A

**Non-patent literature cited in the description**

- Dynamically reconfiguring a Frequency Division Duplex (FDD) User Equipment (UE) receiver to reduce power consumption when desired. *3GPP TR 25.906*

- Discussion on the possibility of dynamically reconfiguring the receiver of a UE which supports enhanced performance requirements. *3GPP R4-060415*